(19) Europäisches Patentamt / European Patent Office / Office européen des brevets

(11) **EP 4 175 746 B1**

(12) **FASCICULE DE BREVET EUROPEEN**

(45) Date de publication et mention
de la délivrance du brevet:
**28.05.2025 Bulletin 2025/22**

(21) Numéro de dépôt: **21746515.2**

(22) Date de dépôt: **05.07.2021**

(51) Classification Internationale des Brevets (IPC):
*B01J 20/10* (2006.01)   *B01J 20/28* (2006.01)
*B01J 20/30* (2006.01)   *B01D 15/22* (2006.01)
*G01N 30/50* (2006.01)

(52) Classification Coopérative des Brevets (CPC):
**B01D 15/22; B01J 20/10; B01J 20/28045;
B01J 20/3078; B01J 20/3085; G01N 30/50**

(86) Numéro de dépôt international:
**PCT/FR2021/051235**

(87) Numéro de publication internationale:
**WO 2022/003307 (06.01.2022 Gazette 2022/01)**

(54) **PROCÉDÉ DE FABRICATION D'UN GARNISSAGE MULTICAPILLAIRE**

VERFAHREN ZUR HERSTELLUNG EINER MULTIKAPILLARAUSKLEIDUNG

METHOD FOR MANUFACTURING A MULTI-CAPILLARY LINING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.07.2020 FR 2007106**

(43) Date de publication de la demande:
**10.05.2023 Bulletin 2023/19**

(73) Titulaire: **SEPARATIVE**
**69360 Solaize (FR)**

(72) Inventeur: **PARMENTIER, François**
**38400 ST MARTIN D'HERES (FR)**

(74) Mandataire: **Regimbeau**
**20, rue de Chazelles**
**75847 Paris Cedex 17 (FR)**

(56) Documents cités:
**WO-A1-2013/064754    WO-A1-2016/050789
WO-A1-95/28279    WO-A2-2011/114017
US-A- 5 774 779**

Description

**DOMAINE DE L'INVENTION**

L'invention concerne un procédé de fabrication d'un garnissage multicapillaire pouvant servir de colonne de chromatographie et le garnissage multicapillaire obtenu par un tel procédé.

**ARRIERE PLAN DE L'INVENTION**

Des garnissages utiles en chromatographie sont généralement composés d'une masse poreuse monolithique, typiquement constituée d'un gel de silice ou d'alumine, et d'une multitude de canaux ou conduits substantiellement rectilignes et parallèles entre eux s'étendant au travers de cette masse poreuse.

Différentes méthodes sont connues pour préparer des garnissages multicapillaires pouvant être employés en chromatographie.

Par exemple, il est connu que des garnissages multicapillaires peuvent être préparés à partir de préformes ablatives, par exemple des fibres assemblées en faisceau, qui sont éliminées après formation d'une matrice poreuse autour des fibres (WO2013/064754), l'ensemble formant une structure monolithique. La matrice poreuse peut notamment être préparée par un procédé sol-gel et être constituée de silice, d'alumine ou d'un aluminosilicate. L'ablation des préformes par combustion ou pyrolyse génère des conduits dans la matrice minérale.

La préparation de ces garnissages s'avère difficile du fait de la finesse des conduits exigés pour certaines applications, et de la difficulté de réaliser des monolithes sans défauts propres, c'est-à-dire sans craquelure et fissure.

Ainsi, un besoin demeure pour la mise à disposition d'un procédé de préparation d'un garnissage multicapillaire permettant de pallier aux inconvénients cités, en particulier minimisant les risques de craquelures et de fissures.

**BREVE DESCRIPTION DE L'INVENTION**

La présente invention porte sur un procédé de fabrication d'un garnissage multicapillaire à partir d'un substrat de préformes ablatives, chaque préforme étant adaptée pour former, lors de son ablation, un conduit permettant la convection d'un fluide dans le garnissage. Le procédé comprend les étapes suivantes :

(a) assemblage des préformes ablatives sous la forme d'au moins un faisceau ;
(b) création d'un gel entre les préformes ablatives du faisceau par hydrolyse d'un précurseur organométallique en présence d'une quantité d'eau n'excédant pas dix fois la quantité stœchiométrique requise pour une hydrolyse complète dudit précurseur organométallique ;
(c) ablation des préformes, de préférence par pyrolyse, oxydation, vaporisation, fusion et drainage, extraction mécanique ou attaque chimique, de sorte à former une pluralité de conduits dans le gel.

Un garnissage multicapillaire susceptible d'être obtenu par le procédé de la présente invention est également décrit.

D'autres aspects de l'invention sont tels que décrits dans les revendications et ci-dessous.

**DESCRIPTION DETAILLEE DE L'INVENTION**

L'inventeur a mis au point un procédé de fabrication d'un garnissage multicapillaire à partir de préformes ablatives répondant aux besoins exprimés.

Le procédé de la présente invention comprend les étapes suivantes :

(a) assemblage des préformes ablatives sous la forme d'au moins un faisceau ;
(b) création d'un gel entre les préformes du faisceau comprenant l'hydrolyse d'un précurseur organométallique en présence d'une quantité d'eau n'excédant pas dix fois, de préférence n'excédant pas cinq fois, la quantité stœchiométrique requise pour une hydrolyse complète dudit précurseur organométallique ;
(c) ablation des préformes par pyrolyse, de préférence par oxydation, vaporisation, fusion et drainage, extraction mécanique ou attaque chimique de sorte à former une pluralité de conduits dans le gel.

Par quantité stœchiométrique d'eau requise pour une hydrolyse complète, on entend la quantité d'eau requise pour convertir la totalité des groupements hydrolysables du précurseur organométallique en liaisons M-O-M (M désigne le métal du précurseur organométallique).

Dans le cas où M est un atome de silicium, en particulier et de façon non limitative, les liaisons M-O-R, M-N-R, M-S-R, M-O-B, où R est un groupement organique, du précurseur organométallique sont considérées comme hydrolysables.

Dans le cas ou M est un atome de silicium, en particulier et de façon non limitative, les liaison, M-C-, sont généralement considérées comme non hydrolysables. On notera cependant que l'ajout de substituants ou hétéroatomes tels que O, N, S, etc... sur le carbone C peut rendre ces liaisons M-C fragiles. Dans ce dernier cas les liaisons seront considérées comme hydrolysables.

Ainsi par exemple, pour une mole de tétraalkoxysilane de formule $M(OR)_4$ avec M = Si, OR étant le radical alkoxy, R étant un alkyle, par exemple un groupement méthyle ou éthyle, la quantité stœchiométrique d'eau requise est de deux moles /mole de tétraalkoxysilane :

$$Si(OR)_4 + 2\ H_2O \rightarrow SiO_2 + 4\ ROH$$

Ainsi par exemple, pour une mole de trialkoxysilane de formule $R'M\ (OR)_3$ avec M = Si, OR étant le radical alkoxy, R étant un alkyle, par exemple un groupement méthyle ou éthyle, R' étant un alkyle, par exemple un groupement méthyle ou éthyle, la quantité stœchiométrique d'eau requise est de 1,5 moles/mole de trialkoxysilane.

Ainsi par exemple, pour une mole de dialkoxysilane de formule $R'R''M\ (OR)_2$ avec M = Si, OR étant le radical alkoxy, R étant un alkyle, par exemple un groupement méthyle ou éthyle, R' étant un alkyle, par exemple un groupement méthyle ou éthyle, R'' étant un alkyle, par exemple un groupement méthyle ou éthyle, la quantité stœchiométrique d'eau requise est d'une mole/mole de dialkoxysilane.

Il est à noter que les molécules d'eau générées lors de la réaction d'hydrolyse et de couplage sont prises en considération dans la détermination de la quantité stœchiométrique d'eau requise pour une hydrolyse complète dudit précurseur organométallique.

Ainsi, dans toutes ces estimations, on tient compte du fait que les groupements silanols résultant de l'hydrolyse et présents sur le silicium se couplent deux à deux pour former des ponts siloxanes afin de former le gel de silice, réaction restituant elle-même une molécule d'eau au milieu réactionnel par pont siloxane créé.

R' et R'' peuvent avantageusement également être des radicaux Dodécyl, Octadécyl, n-Octyl, n-Propyl, n-Butyl, Vinyl, 3-Chloropropyl, 3-Aminopropyl, 2-Aminoéthyl-3-aminopropyl, 3-Aminopropyl, 3-Ureidopropyl, 3-Glycidoxypropyl, 3-Glycidoxypropyl, 3-Méthacryloxypropyl, Bis(propyl)tétrasulfide, Bis(propyl)disulfide, 3-Mercaptopropyl, Trifluoropropyl, contenir des liaisons époxy, etc.O-R peut avantageusement être un radical alkoxy (ex. méthoxy , éthoxy), acyloxy, acétoxy, kétoxime, méthyléthylkétoxime, Oximino, etc..., $(O-R)_4$, $(O-R)_3$, $(O-R)_2$, pouvant eux-mêmes représenter 4, 3, ou 2 respectivement groupements R précédemment listés tous identiques ou différents.

Les préformes ablatives sont typiquement adaptées pour former lors de leur destruction ou élimination des conduits axiaux, substantiellement rectilignes et parallèles entre eux, permettant la convection d'un fluide (ex. phase mobile) entre une face d'entrée du garnissage et une face de sortie du garnissage. De préférence, les préformes ablatives sont sous forme de fibres ou de fils.

Les préformes ablatives peuvent être constituées, en particulier composées, de matériaux tels du carbone (ex. fibres de carbone), du polyester, du polyamide, des polyoléfines (ex. du polypropylène, du polyéthylène), du polyacrylate, du polyméthacrylate, des polysulfones, des polyuéthanes, du polyimide, du polyéther, par exemple des polymères biodégradables (ex. polydioxanone, acide polyglycolique, acide polylactique). Les préformes ablatives peuvent être des fils fusibles, par exemple des fils comprenant de l'indium, du bismuth, de l'étain, du gallium, de l'argent ou un de leurs alliages avec d'autres métaux, de préférence à l'exclusion du plomb, du mercure et du cadmium.

Ainsi, dans certains modes de réalisation, les préformes comprennent des fils de polyamide, de polyoléfine, de polyacrylate, de polyméthacrylate, de polysulfone, de polyuréthane, de polyimide, de polyéther ou des fils de polyester.

Les préformes ablatives peuvent être constituées de fibres qui peuvent être creuses, poreuses ou non. Les fibres ont une section de préférence circulaire, mais éventuellement non circulaire, comme des sections carrées, rectangulaires, hexagonales, polygonales, ou sous forme de film. Cette liste n'est pas limitative.

Les préformes ablatives présentent préférentiellement une section comprise entre quelques dixièmes de micromètres carrés et quelques micromètres carrés.

De préférence, le diamètre des préformes sera inférieur à 250 µm, avantageusement inférieur à 100 µm, et encore plus avantageusement inférieur à 5 µm.

Le diamètre considéré sera le diamètre hydraulique mesuré perpendiculairement à la direction moyenne de l'écoulement du fluide dans le garnissage.

La définition du diamètre hydraulique d est la suivante :

$$d = \frac{4A}{P}$$

où A est l'aire de la section de passage du tube et P est le périmètre mouillé de cette section.

Dans certains modes de réalisation, les préformes ablatives peuvent s'étendre linéairement et sans interruption entre une face d'entrée et une face de sortie du matériau.

Dans d'autres modes de réalisation, les préformes ablatives se conforment ou s'étendent dans seulement une portion du matériau et s'y trouvent immergés ou occlus. Ainsi, dans certains modes de réalisation, les préformes peuvent être sous forme de tronçons occlus dans le corps du garnissage.

Dans ces modes de réalisation, un empilement compact de préformes ablatives est réalisé dans le matériau afin de favoriser dans le garnissage final le transfert convectif d'un fluide circulant dans le matériau entre les conduits et vers une face de sortie.

Dans tous les cas, on augmente ainsi la perméabilité du matériau vis-à-vis d'un fluide circulant.

Avantageusement les préformes ablatives présentent des dimensions aussi uniformes que possibles. Les préformes peuvent être caractérisées par au moins deux dimensions :

   1. le diamètre ou diamètre hydraulique des préformes ; et
   2. la longueur des préformes.

Avantageusement, le diamètre ou diamètre hydraulique présente une variabilité caractérisée par son écart type relatif inférieur à 30%, de préférence inférieur à 10%, encore plus préférentiellement inférieur à 2% du diamètre moyen des préformes. Avantageusement, la longueur présente une variabilité caractérisée par son écart type relatif inférieur à 30%, de préférence inférieur à 10%, encore plus préférentiellement inférieur à 2% de la longueur moyenne des préformes.

Dans certains modes de réalisation, les préformes ablatives sont recouvertes d'une substance granulaire poreuse, par exemple de microbilles de silice, de verre, d'un gel de silice, d'un gel d'alumine, d'un gel de titane ou d'un gel d'oxyde de zirconium. Cette couche de substance granulaire poreuse peut présenter au moins deux intérêts : elle évite le contact entre les formes ablatives, la substance granulaire poreuse jouant le rôle d'espaceur, et elle peut apporter une fonctionnalité propre au matériau (par exemple une fonctionnalité réactive ou un rôle catalytique).

Les pores de la substance granulaire peuvent être obturés par un tiers corps. Ce tiers corps est de préférence un solide organique pyrolysable, soluble dans un solvant ou volatil par exemple une paraffine. Avantageusement, ce tiers corps peut être éliminé dans la suite du procédé (par exemple avant ou après élimination des formes ablatives ou de manière concomitante à cette ablation) et ne se retrouve pas dans le produit final.

Les préformes, assemblées sous forme de faisceau, sont solidarisées au moyen d'un gel, jouant le rôle de liant, pour donner une structure monolithique.

Le gel peut être basé sur tout composé minéral amenant une cohésion du monolithe. Ainsi, le gel peut être un gel à base d'oxyde d'aluminium, oxyde de silicium, oxyde de zirconium, oxyde de titane, oxyde de terre rare comme l'yttrium, le cérium ou le lanthane, oxyde de bore, oxyde de fer, oxyde de magnésium, oxyde de calcium, oxyde de strontium, oxyde de baryum, oxyde de germanium, oxyde de phosphore, oxyde de lithium, oxyde de potassium, oxyde de sodium, oxyde de niobium, oxyde de cuivre ou un de leurs mélanges.

Dans certains modes de réalisation, le gel est un gel à base d'oxyde de silicium (gel de silice) ou d'oxyde d'aluminium (gel d'alumine).

Dans certains modes de réalisation, le gel est un gel à base d'oxyde de zirconium ou d'oxyde de titane.

Dans certains modes de réalisation, le gel est un gel d'oxyde multi-composants. Par exemple, le gel peut être constitué de binaires d'oxydes de zirconium et d'yttrium, de zirconium et de cérium, de zirconium et de calcium, de baryum et de titane, de lithium et de niobium, de phosphore et de sodium ou de bore et de lithium. Le gel peut être un gel constitué de silicate, par exemple des silicates binaires basés sur de la silice et de l'oxyde de bore, de l'oxyde d'aluminium, de l'oxyde de germanium, de l'oxyde de titane, de l'oxyde de zirconium, de l'oxyde de strontium ou de l'oxyde de fer, des silicates ternaires, des silicates multi-composants comportant plus de trois constituants. Dans certains modes de réalisation, le gel est un gel d'oxyde multi-composants, par exemple un gel d'aluminosilicate, par exemple une argile.

Le gel est préparé *in situ* par la voie bien connue dite sol-gel (« solution-gélification »).

Le gel est alors typiquement créé par immersion du ou des faisceaux de préformes dans un sol précurseur d'un gel qui est ensuite traité de manière à former un gel. Le sol est typiquement coulé sur les préformes disposées dans un moule ou dans un tube.

Suivant un autre mode de réalisation, les préformes sont ajoutées au sol, et le mélange est coulé dans un moule ou dans un tube.

Par sol, est désigné ici tout mélange comprenant un précurseur organométallique, et avantageusement de l'eau en quantité n'excédant pas dix fois la quantité stœchiométrique requise pour une hydrolyse complète dudit précurseur organométallique.

Dans le cadre de la présente invention, le gel est créé entre les préformes par hydrolyse d'un précurseur organométallique. Le précurseur organométallique comprend au moins un, notamment au moins deux groupements hydroxyles ou groupements hydrolysables pour former des oxydes métalliques lors de leur hydrolyse. Ainsi, le précurseur organométallique est typiquement un alkoxide organométallique, un acétate organométallique, un carboxylate organométallique, un halogénure organométallique, un nitrate organométallique, un alcanoate organométallique ou un acyloxyde organométallique.

Des exemples de précurseurs organométalliques incluent de manière non limitative le tétrachlorosilane, le nitrate d'aluminium (qui peut être hydrolysé en présence d'urée), le tétraméthoxysilane, le tétraéthoxysilane, le diiéthyl(diméthoxy)silane le triéthyl(méthoxy)silane.

Le précurseur organométallique est de préférence un alkoxide organométallique.

L'hydrolyse du ou des précurseurs organométalliques est réalisée en milieu aqueux. Le milieu aqueux peut comprendre exclusivement de l'eau ou peut comprendre un mélange d'eau et d'un solvant organique, par exemple le méthanol ou l'éthanol, afin de rendre le mélange homogène. La quantité de solvant organique est typiquement inférieure à 12 fois le volume du précurseur organométallique, de manière préférée 4 fois inférieure à ce volume, de manière encore plus préférée 2 fois inférieure à ce volume, et en particulier inférieure à 0,5 fois ce volume. Dans certains modes de réalisation, le précurseur organométallique est placé dans de l'eau sous agitation jusqu'à former un mélange homogène par hydrolyse partielle du précurseur.

Il a été mis en évidence que lorsque le gel est créé par hydrolyse d'un précurseur organométallique en présence d'une quantité d'eau n'excédant pas dix fois ou six fois, ou cinq fois, de préférence n'excédant pas quatre fois, de manière encore plus préférée n'excédant pas deux fois, voire 1.25 fois la quantité stœchiométrique (quantité molaire stœchiométrique) requise pour une hydrolyse complète dudit précurseur organométallique, le garnissage multicapillaire/la structure monolithique obtenu par le procédé de la présente invention présente un minimum de craquelures, de fissures et de défauts. Dans certains modes de réalisation, l'hydrolyse du précurseur organométallique est réalisée en présence d'une quantité d'eau sensiblement égale, voire égale à la quantité stœchiométrique (quantité molaire stœchiométrique) requise pour une hydrolyse complète dudit précurseur organométallique. Dans certains modes de réalisation, l'hydrolyse du précurseur organométallique est réalisée en présence d'une quantité d'eau n'atteignant pas la quantité stœchiométrique (quantité molaire stœchiométrique) requise pour une hydrolyse complète dudit précurseur organométallique, par exemple la quantité d'eau peut être la moitié de la quantité stœchiométrique (quantité molaire stœchiométrique) requise pour une hydrolyse complète dudit précurseur organométallique. Ainsi, l'hydrolyse du précurseur organométallique peut être réalisée en présence d'une quantité d'eau variant de 0.5 fois à 10 fois ou de 0.5 à 5 fois la quantité stœchiométrique (quantité molaire stœchiométrique) requise pour une hydrolyse complète dudit précurseur organométallique.

L'étape d'hydrolyse est typiquement catalysée par un acide ou une base. Le choix d'une catalyse acide ou basique dépend typiquement du ou des précurseurs utilisés.

Avantageusement, dans le cas où la partie métallique du précurseur organométallique est constituée d'un ou plusieurs atomes de silicium, une succession de catalyse peut être réalisé : par exemple une première hydrolyse acide peut être réalisée de préférence avant insertion du sol entre les préformes des conduits (i.e., avant immersion des préformes ablatives du faisceau dans le sol), suivi d'un ajout de base résultant en une hydrolyse en milieu basique du sol entre les préformes des conduits.

Dans certains modes de réalisation, le gel est créé par hydrolyse d'un précurseur organométallique choisi parmi les dérivés organométalliques du silicium, de l'aluminium, du zirconium, du titane, d'une terre rare comme l'yttrium, le cérium ou le lanthane, du bore, du fer, du magnésium, du calcium, du strontium, du baryum, du germanium, du phosphore, du lithium, du potassium, du sodium, du niobium, du cuivre ou d'un de leurs mélanges, de préférence le silicium, le zirconium ou le titane. Les mélanges pourront être binaires, ternaires voire comprendre plus de trois dérivés organométalliques.

Dans certains modes de réalisation, le gel est créé par hydrolyse d'un ou plusieurs précurseurs organométalliques qui peuvent être tels que décrits ci-dessus en présence d'un ou plusieurs sels métalliques, par exemples des nitrates ou des chlorures.

Le choix du ou des précurseurs organométalliques dépendra de la nature du garnissage désiré. Pour une application en chromatographie, les précurseurs organométalliques seront avantageusement choisis de manière à donner un gel le plus cohésif et le plus rigide possible. Le gel sera le plus dense possible afin de présenter la surface spécifique la plus élevée possible par unité de volume du matériau et pour une taille de pore donnée.

Ainsi, en d'autres termes, l'étape b) de création d'un gel peut être avantageusement formulée de la manière suivante :

> (b1) préparation d'un sol comprenant un précurseur organométallique tel que décrit ci-dessus;
> (b2) immersion des préformes ablatives du faisceau dans le sol ;
> (c2) hydrolyse du précurseur organométallique en présence d'une quantité d'eau n'excédant pas dix fois ou cinq fois la quantité stœchiométrique requise pour une hydrolyse complète dudit précurseur organométallique de manière à créer un gel.

Une fois le gel formé, les préformes peuvent être abattues, avantageusement par pyrolyse, oxydation, vaporisation, fusion et drainage, extraction mécanique ou attaque chimique. Après destruction ou élimination des préformes, seul le gel traversé par des conduits subsiste.

Eventuellement plusieurs étapes d'abattage ou ablation seront mises en œuvre, comme une première étape d'hydrolyse suivie d'une étape de pyrolyse.

Eventuellement, cette étape ablative peut être complétée ou confondue avec d'une part un traitement thermique comme un frittage afin de consolider le réseau et la résistance mécanique du matériau. Ces traitements thermiques sont connus de l'homme de l'art.

Typiquement pour un gel de silice, un tel traitement thermique peut constituer en un recuit à des températures avantageusement comprises entre 650 et 850 °C, sur une durée pouvant varier entre quelques minutes ou dizaines de minutes à plusieurs heures ou dizaines d'heures. Par exemple, un tel traitement pourra être conduit à 700 °C durant 2h à 12 heures.

Eventuellement, cette étape ablative ou cette étape de recuit thermique supplémentaire peut, dans le cas d'un gel de silice, être suivie d'une étape de réhydroxylation de la surface du gel, par un traitement à la vapeur d'eau, par un traitement hydrothermal, ou par un traitement en milieu aqueux basique ou acide par exemple, suivant toute technique connue de l'homme de l'art. On sait en effet que des températures élevées, supérieures à 170 °C, mais plus particulièrement supérieures à 500 °C, voire 700 °C favorisent la deshydroxylation de la surface du gel de silice de façon plus ou moins réversible. Typiquement, un gel de silice réalisé à température ambiante et séché à 105 °C présente entre 8 et 4,5 groupements silanol par $nm^2$. A 170°C, cette population commence à décroitre lentement, et baisse avec la température du traitement jusqu'à ne laisser que 1 groupement silanol par $nm^2$ environ à 700 °C. Cette deshydroxylation peut nuire à l'application finale du garnissage, en modifiant ses caractéristiques d'adsorption, la surface devenant moins polaire, en altérant sa capacité à recevoir un greffage fonctionnel, et en rendant la surface instable en présence d'eau. Une réhydroxylation peut donc être nécessaire pour restaurer la fonctionnalité du gel de silice.

Avant ou après ablation des préformes, le gel est séché. Le séchage est réalisé dans des conditions permettant de garantir au mieux son intégrité structurelle et mécanique, en particulier de manière à limiter au maximum la formation de fissures et de retraits macroscopiques ou microscopiques.

Le séchage peut être réalisé sous vide ou à pression atmosphérique, préférentiellement à température ambiante. Le séchage est typiquement réalisé de manière lente sous température et pression partielle contrôlée. La durée de séchage est typiquement d'au moins une heure, voire supérieure à dix heures, supérieure à 24 heures et peut aller jusqu'à plusieurs jours. Dans certains modes de réalisation, la durée de séchage est de 48 heures. La durée de séchage sera d'autant plus grande que le volume du matériau à sécher sera important, notamment d'autant plus que le matériau sera épais. Dans certains modes de réalisation, le séchage est réalisé à température ambiante (20-25°C) sous vide à une pression de 1 à 50 kPa pendant environ 48 heures.

La technologie de séchage lent permet avantageusement d'obtenir des garnissages de grande taille présentant un grand nombre de conduits. Ainsi, le procédé de la présente invention peut permettre de préparer des garnissages comprenant plus de cent conduits, voire plus de mille conduits, et ou encore plus de dix mille conduits.

Le procédé de la présente invention peut permettre de préparer des garnissages présentant une section supérieure à 0,1 $cm^2$, plus avantageusement supérieure à 1 $cm^2$, encore plus avantageusement supérieure à 10 $cm^2$ voire supérieure à 100 $cm^2$.

Dans certains modes de réalisation, le séchage est réalisé après un mûrissement permettant de renforcer la structure du gel et d'augmenter le diamètre de ses pores. Le mûrissement est typiquement réalisé en maintenant le gel à température ambiante pendant une durée d'environ 24 heures ou supérieure à 24 heures.

De façon générale, un gel de silice a typiquement une surface spécifique allant de 20 à 1200 $m^2/g$, de manière préférée allant de 20 à 700 $m^2/g$, de manière encore plus préférée comprise entre 70 et 450 $m^2/g$.

Le gel de silice a typiquement un volume poreux allant de 20 % à 90% en volume du gel, plus avantageusement allant de 40 % à 70% voire 65% en volume du gel. Par « volume du gel », on entend le volume de gel compris entre les conduits du monolithe délimité par son contour extérieur, distincts d'espaceurs éventuels destinés à maintenir un passage ouvert au fluide en maintenant un espace entre différentes masses ou portions de gel de silice, et hors du volume délimitant les contours des espaceurs, i.e., le volume du gel situé entre les conduits du monolithe. Les éventuels espaceurs ne sont pas pris en compte dans la détermination de volume du gel ; autrement dit, dans le cas où des espaceurs sont présents, on considère le gel situé à l'extérieur des espaceurs.

Le gel de silice est généralement réalisé de manière à obtenir des pores de grands diamètres. Il est connu que les forces de tension capillaire menant aux retraits et aux fissurations du gel lors de son séchage varient comme l'inverse de ce diamètre. Le diamètre des pores du gel avant séchage est typiquement supérieur à 4 nm, de préférence supérieur à 10 nm et n'excède généralement pas 1000 nm. Le diamètre des pores du gel après séchage est typiquement supérieur à 2 nm, de préférence supérieur à 10 nm et n'excède généralement pas 1000 nm.

Dans certains modes de réalisation, le sol précurseur du gel de silice comprend des additifs conventionnellement utilisés pour la préparation de garnissages. Ainsi, le sol peut comprendre des agents tensioactifs ou des additifs chimiques de contrôle de séchage comme le formamide. Celui-ci permettra de réduire les fissurations au séchage.

Dans certains modes de réalisation, une charge solide peut être ajoutée au gel. La charge solide peut permettre

**EP 4 175 746 B1**

de renforcer mécaniquement le gel obtenu, de limiter son retrait, et éventuellement d'apporter au gel final une fonctionnalité supplémentaire comme de la surface spécifique additionnelle ou une fonctionnalité catalytique.

La charge solide peut être de la poudre de gel de silice ou de gel d'alumine.

Avantageusement cette poudre présente une surface spécifique élevée, avantageusement supérieure à 250 $m^2/g$, plus avantageusement supérieure à 450 $m^2/g$, encore plus avantageusement supérieure à 700 $m^2/g$. Avantageusement cette poudre présente une très fine granulométrie, inférieure à 25 $\mu m$, préférentiellement inférieure à 3 $\mu m$, plus préférentiellement inférieure à 0,5 $\mu m$.

La charge solide peut être constituée de fibres, microfibres ou nanofibres, comme des whiskers comme les fibres de titanates de potassium. Celles-ci sont en particulier commercialisées sous la marque Tismo D. Elle confèrent une plus grande rigidité au matériau final.

Les surfaces spécifiques, tailles de pores et volumes poreux mentionnés dans ce texte sont mesurés par adsorption d'azote suivant la méthode BET.

Le garnissage obtenu par le procédé de la présente invention peut ensuite être pyrolysé à haute température, par exemple à des températures allant de 300 à 700°C.

Le garnissage obtenu par le procédé de la présente invention peut être modifié en surface.

Eventuellement, un garnissage de gel de silice peut être greffé à l'aide d'un silane fonctionnel, afin de modifier ses propriétés d'adsorption et de rétention pour une application chromatographique.

Parmi les silanes fonctionnels utilisables, peuvent être cités de manière non limitative les dodécyltrimethoxysilane, Octadécyltriméthoxysilane, Hexadecyltriméthoxysilane, Méthyltrimethoxysilane, n-Octyltriéthoxysilane, n-Octyltrimethoxysilane, n-Propyltriméthoxysilane, n-Propyltriéthoxysilane, Méthyltriacétoxysilane, Ethyltriacétoxysilane, Vinyltriacétoxysilane, Vinyltri(2-méthoxyéthoxy)silane, 3-Chloropropyltriéthoxysilane, 3-Chloropropyltrimethoxysilane, 3-Chloropropylméthyldiméthoxysilane, 3-Aminopropyltriéthoxysilane, 2-Aminoéthyl-3-aminopropyltriméthoxysilane, 3-Aminopropyltriméthoxysilane, Bis(triméthoxysilypropyl)amine, 3-Ureidopropyltriméthoxysilane, 3-Glycidoxypropyltriméthoxysilane, 3-Glycidoxypropylméthyldiméthoxysilane, 3-Méthacryloxypropyltrimethoxysilane, 3-Méthacryloxypropylméthyldiméthoxysilane, Bis(3-triéthoxysilylpropyl)tétrasulfide, Bis(3-triéthoxysilylpropyl)disulfide, 3-Mercaptopropyltriméthoxysilane, 3-Mercaptopropylméthyldiméthoxysilane, Vinyltris(méthyléthylketoxime)silane, vinyl Oximino Silane, Méthyltris(methylethylketoxime)silane, Méthyl Oximino Silane, Tétra(methylethylketoxime)silane, Trifluoropropylméthyldiméthoxylsilane, des silanes contenant des liaisons époxy, etc...

Exemples de modes de réalisation

*Premier mode de réalisation*

Dans certains modes de réalisation, le matériau obtenu, i.e., le gel, est mésoporeux et ne présente de préférence pas de macroporosité. Le gel diffère en particulier des gels de silice multimodaux commercialisés par la société Merck sous le nom commercial de Chromolith, et dérivés des recherches de Mrs K Nakanishi [1], [2], et N. Ishizuka [3].

De tels gels sont obtenus par un procédé sol gel standard ne faisant pas intervenir de décomposition spinodale.

Il est généralement considéré que le domaine de la microporosité comprend les pores de diamètre inférieur à 2 nm, que le domaine de la mésoporosité comprend les pores de diamètre compris entre 2 nm et 50 nm, et que le domaine de la microporosité comprend les pores de diamètre supérieurs à 50 nm.

Cependant, il est considéré ici que le domaine de la microporosité comprend les pores de diamètre inférieur à 2 nm, que le domaine de la mésoporosité comprend les pores de diamètre compris entre 2 nm et 150 nm, et que le domaine de la microporosité comprend les pores de diamètre supérieur à 150 nm,

Le gel de silice alors obtenu présente une fraction volumique de macropores inférieure à 50% de son volume poreux total, plus avantageusement inférieure à 25% de son volume poreux total, encore plus avantageusement inférieure à 10% de son volume poreux total.

Avantageusement le gel de silice présente une fraction volumique de micropores inférieure à 30% de son volume poreux total, plus avantageusement inférieure à 10% de son volume poreux total, encore plus avantageusement inférieure à 5% de son volume poreux total.

Avantageusement le gel de silice présente une fraction volumique de mésopores supérieure à 30% de son volume poreux total, plus avantageusement supérieure à 65% de son volume poreux total, encore plus avantageusement supérieure à 80% de son volume poreux total.

Les fractions volumiques de pores sont déterminées par mesures de l'adsorption d'azote par la méthode de Brunauer Emett et Teller, connue sous le nom de méthode BET. Cette mesure sera effectuée sur le domaine poreux constituant le gel proprement dit, à l'exclusion du volume des conduits.

Il a été mis en évidence que lorsqu'un gel de silice est créé par hydrolyse d'un précurseur organométallique en présence d'une quantité d'eau n'excédant pas dix fois, de préférence n'excédant pas six fois ou n'excédant pas cinq fois, de manière encore plus préférée n'excédant pas quatre fois, voire deux fois la quantité stœchiométrique (quantité molaire stœchiométrique) requise pour une hydrolyse complète dudit précurseur organométallique, le garnissage multicapillaire/la structure monolithique ou gel de silice obtenu présente un minimum de craquelures, de fissures et de défauts avec une densité du gel, présentant par exemple une densité de silice, élevée (typiquement de 0.05 à 1,2 g/cm$^3$, de préférence comprise entre 0,1 et 0,8 g/cm$^3$).

De façon avantageuse, la densité du gel de silice obtenu par le procédé d'hydrolyse sera comprise entre 0,1 et 0,40 g/cm$^3$. De façon plus avantageuse, la densité du gel de silice obtenu par le procédé d'hydrolyse sera comprise entre 0,15 et 0,35 g/cm$^3$.

C'est en effet la gamme de densité qui résulte de l'hydrolyse du tétraméthoxysilane ou du tétraéthoxysilane avec des quantités d'eau comprises entre 1 et 10 fois la quantité stœchiométrique requise, tout particulièrement lorsque le séchage est un séchage lent comme présentement décrit, ce séchage induisant un retrait négligeable. Cette spécificité répond à la nécessité de réaliser des monolithes respectant les cotes dimensionnelles des préformes, sans distorsion ni fissuration ou fragmentation du gel séché final, et présentant une solidité mécanique suffisante et une densité de silice la plus élevée possible.

La densité du gel constitue un indice de l'utilisation possible du procédé sol gel pour réaliser le matériau multicapillaire.

Il est de plus noté que la densité du gel de silice obtenu est d'autant plus élevée que R est de bas poids moléculaire.

De façon préférentielle, dans ce premier mode de réalisation, le précurseur organométallique d'un gel de silice est le tétraméthoxysilane. Dans ce cas, la densité théorique en l'absence de tout retrait par synérèse, séchage, ou traitement thermique du gel de silice résultant dudit procédé est comprise entre 0, 18 et 0,32 g/cm$^3$.

De façon préférentielle, dans ce premier mode de réalisation, si des considérations de sécurité prévalent, on utilisera plutôt comme précurseur organométallique du gel de silice du tétraéthoxysilane, moins toxique et dangereux à manipuler. Dans ce cas, la densité théorique en l'absence de tout retrait par synérèse, séchage, ou traitement thermique du gel de silice résultant dudit procédé est comprise entre 0, 15 et 0,25 g/cm$^3$.

Par densité du gel de silice, on entend la densité du gel résultant du procédé d'hydrolyse, compris entre les conduits du monolithe délimité par son contour extérieur et à l'exclusion du volume des conduits, i.e., la densité du gel située entre les conduits du monolithe. Les éventuels espaceurs ne sont pas pris en compte dans la détermination de la densité du gel ; autrement dit, dans le cas où des espaceurs sont présents, on considère le gel situé à l'extérieur des espaceurs.

D'autre part, si le gel de silice contient des tiers corps comme des fibres, microfibres, nanofibres, et des particules ou nanoparticules, la densité considérée est la densité du milieu extérieur à ces tiers corps et produite par le procédé sol gel proprement dit.

Pour mesurer la densité, peut être utilisée :

1. Soit la porosimétrie suivant la méthode BET si le gel de silice ne contient pas de tels tiers corps ;
2. Soit la microscopie électronique en transmission suivie de l'analyse d'image, sur une coupe du matériau si le gel de silice contient de tels tiers corps.

Avantageusement, dans ce premier mode de réalisation, les conduits pourront s'étendre linéairement et sans interruption entre une face d'entrée et une face de sortie du matériau.

*Deuxième mode de réalisation*

Dans certains modes de réalisation, le matériau obtenu, i.e., le gel, est macroporeux. En particulier il s'agira de gels de silice multimodaux, du type commercialisés par la société Merck sous le nom commercial de Chromolith, et dérivés des recherches de Mr Takanishi et Ishizuka [1] [2] [3] au Japon.

Ces gels sont typiquement synthétisés par décomposition spinodale d'un gel de silice par un procédé sol gel en présence d'un polymère tel que par exemple l'alcool polyvinylique, le polyéthylène glycol, etc... De cette manière, un squelette de silice tridimensionnel macroporeux est formé, dont la taille des macropores peut atteindre plusieurs micromètres. Le squelette de silice est lui-même mésoporeux. Une phase mobile chromatographique peut percoler au travers des micropores, et interagir avec la surface du gel de silice des mésopores.

Ces gels de silice particuliers sont désignés ici par les termes « gels multimodaux ».

Avantageusement, suivant l'invention, un gel de silice multimodal est créé par hydrolyse d'un précurseur organométallique en présence d'une quantité d'eau n'excédant pas six fois, de préférence n'excédant pas cinq fois, de manière encore plus préférée n'excédant pas quatre fois, voire deux fois la quantité stœchiométrique (quantité molaire stœchiométrique) requise pour une hydrolyse complète dudit précurseur organométallique. Le garnissage multicapillaire/la structure monolithique obtenu par le procédé de la présente invention présente alors un minimum de retrait au séchage, un maximum de compacité, de fissures et de défauts avec une densité du gel, et présente par exemple une densité de silice, élevée (typiquement de 0.05 à 1,2 g/cm$^3$, de préférence comprise entre 0,1 et 0,8 g/cm$^3$).

On notera de plus que la densité du gel de silice obtenu est d'autant plus élevée que R est de bas poids moléculaire.

De façon préférentielle, dans ce mode de réalisation conduisant à un gel de silice multimodal, le précurseur organométallique est le tétraméthoxysilane.

De façon préférentielle si des considérations de sécurité prévalent, le précurseur organométallique d'un gel de silice multimodal est le tétraéthoxysilane, moins toxique et dangereux à manipuler.

Par densité du gel de silice, on entend la densité du gel résultant du procédé d'hydrolyse, compris entre les conduits du monolithe délimité par son contour extérieur et à l'exclusion du volume des conduits, i.e., la densité du gel ou de la partie du gel résultant du procédé d'hydrolyse, située entre les conduits du monolithe. Les éventuels espaceurs ne sont pas pris en compte dans la détermination de la densité du gel ; autrement dit, dans le cas où des espaceurs sont présents, on considère le gel situé à l'extérieur des espaceurs.

D'autre part, si le gel de silice contient des tiers corps comme des fibres, microfibres, nanofibres, et des particules ou nanoparticules, la densité considérée est la densité du milieu extérieur à ces tiers corps et produite par le procédé sol gel proprement dit.

Pour mesurer la densité, peut être utilisée :

    1. Soit la porosimétrie suivant la méthode BET si le gel de silice ne contient pas de tels tiers corps

    2. Soit la microscopie électronique en transmission suivie de l'analyse d'image, sur une coupe du matériau si le gel de silice contient de tels tiers corps.

Avantageusement, dans le deuxième mode de réalisation, les préformes sont de préférence des fils ou fibres pyrolysables ou hydrolysables (ex. tronçons ou segments), par exemple des fils pyrolysables ou hydrolysables à base de carbone comme en particulier des fibres de carbone, des fils de polymères, polyoléfines, polysulfones, polyuréthane, polyacrylates et polyméthacrylates, polyamides, polyimides, polyéthers ou polyesters, et leurs dérivés, qui sont typiquement occlus dans le gel. Les conduits résultant de l'ablation des préformes peuvent s'étendre dans une portion du matériau seulement, et s'y trouver immergés ou occlus. En effet, on accompagne ainsi plus aisément les retraits inhérents au séchage de tels gels de silice, et on réduit les contraintes pouvant mener à leur fissuration. D'autre part la présence de macropores de grandes tailles dans des gels multimodaux permet une convection aisée d'un fluide percolant entre conduits adjacents. Un empilement compact de conduits peut être réalisé dans le matériau afin de favoriser le transfert convectif d'un fluide circulant dans le matériau entre les conduits et vers une face de sortie.

Les fils ou fibres, plus particulièrement les segments de fils, ont généralement une longueur comprise entre quelques micromètres et quelques centimètres, typiquement comprise entre un et dix millimètres. Avantageusement ces fils ont une longueur supérieure au diamètre du garnissage final.

Les fils sont typiquement orientés statistiquement dans le sens d'écoulement du fluide, c'est à dire de l'entrée vers la sortie du garnissage.

Les fils ont généralement un diamètre inférieur à 50 $\mu$m, plus avantageusement inférieur à 10 $\mu$m, encore plus avantageusement inférieurs à 5$\mu$m.

Les fils peuvent être recouverts d'un espaceur afin d'éviter qu'ils ne se touchent dans le garnissage et qu'ils ne produisent des points de fragilité et des passages préférentiels en ces points de contact. L'espaceur peut être une couche de solide poreux.

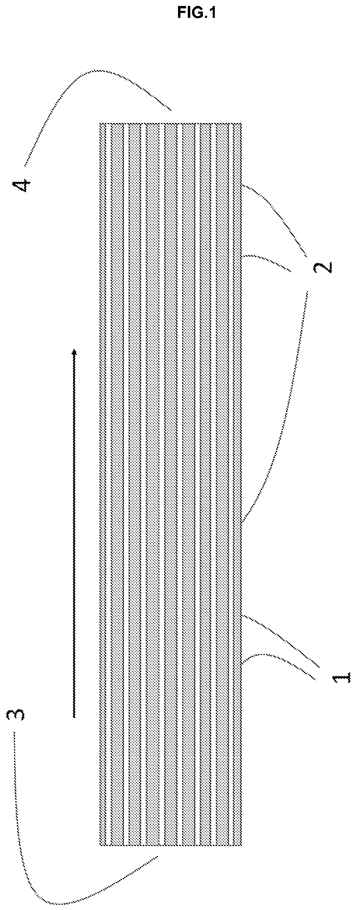

La figure 1 représente schématiquement, vue en coupe axiale, un garnissage multicapillaire comportant des conduits continus 2 s'étendant axialement entre une face d'entrée 3 et une face de sortie 4 dans une masse poreuse 1 obtenue par un procédé sol gel.

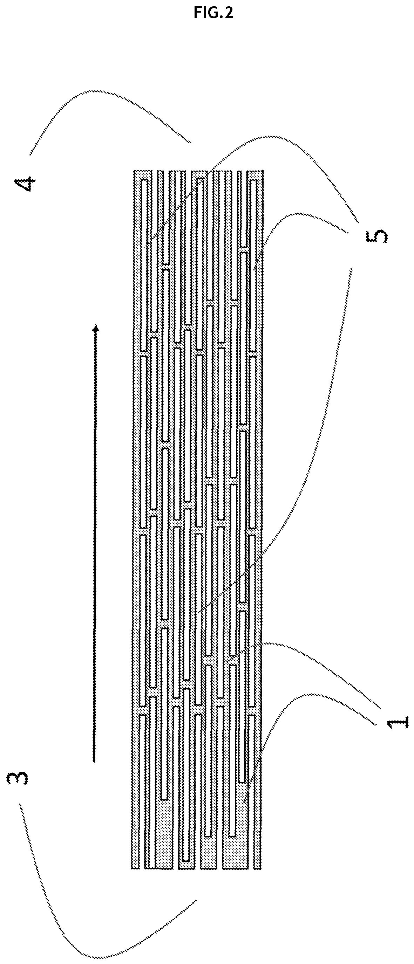

La figure 2 représente schématiquement, vue en coupe axiale, un garnissage multicapillaire comportant des conduits discontinus disposés sous forme de tronçons 5 s'étendant axialement entre une face d'entrée 3 et une face de sortie 4 et occlus dans une masse poreuse 1 obtenue par un procédé sol gel.

Des modes de réalisation de l'invention sont illustrés dans les exemples qui suivent. Ces exemples ne doivent en aucun cas être considérés comme limitatifs de la présente invention.

**EXEMPLES**

Exemple 1

Dans cet exemple, les fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion.

Un monofilament de polyamide (d'environ 100 $\mu$m de diamètre externe) est trempé dans une solution aqueuse contenant 10% d'un alcool polyvinylique et 15% en poids de microbilles de verre fournies par la firme Potters Ballotini présentant une répartition granulométrique comprise entre 40 et 70 $\mu$m de diamètre. Le monofilament est ensuite séché. De cette façon, l'extérieur du filament de polyamide est recouvert de microbilles de gel de silice qui servent d'espaceurs, adhérentes à sa surface par l'action du PVA qui sert de colle.

Un faisceau est fabriqué en assemblant ces filaments en un faisceau de section rectangulaire de 1700 $\mu$m de largeur, de 250 $\mu$m de profondeur et de 100 mm de long. Ce faisceau est créé par enroulement dans un conduit précisément usiné dans une feuille d'acier inoxydable 316 L de 100 mm x 20 mm x 10 mm. Le faisceau de fibres de polyamide est imprégné par un mélange de 25 ml de tétraéthoxysilane, de 10,0 ml d'eau minéralisée et de 0,35 ml d'ammoniaque 1 N préalablement agitée jusqu'à formation d'un mélange monophasique. Le liquide doit totalement mouiller et remplir le conduit ainsi que le garnissage. Le garnissage est refermé par un couvercle supérieur constitué d'une feuille d'acier inoxydable plane de dimensions identiques à celles de la feuille d'acier de base, vissée sur celle-ci, sur laquelle est préalablement déposée une épaisseur de 5 micromètres environ d'une paraffine fondant à 90 °C.

Le mélange est laissé à polymériser et geler durant 24 heures à 80 °C.

Les deux extrémités du garnissage ainsi formé sont coupées au ras de la feuille d'acier de façon à libérer la section du garnissage.

Le garnissage a une longueur de 100 mm.

Le couvercle est enlevé après avoir porté le garnissage à la température de 95°C de façon à fondre la paraffine, et le garnissage est séché sous un vide de 2 kPa à la température de 20°C durant 48 heures.

Le produit résultant est chauffé jusqu'à 550°C dans une atmosphère d'air pour le convertir en un garnissage multicapillaire en brûlant les fibres polymériques.

Une fois refroidi, le garnissage est clos de nouveau sur sa partie supérieure par une feuille plane d'acier inoxydable des mêmes dimensions, ou couvercle, vissée sur celle contenant le garnissage.

Exemple 2

Dans cet exemple, les fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion.

Un monofilament de polyamide (d'environ 100 $\mu$m de diamètre externe) est trempé dans une solution aqueuse contenant 10% d'un alcool polyvinylique et 15% en poids de microbilles de verre fournies par la firme Potters Ballotini présentant une répartition granulométrique comprise entre 40 et 70 $\mu$m de diamètre. Le monofilament est ensuite séché. De cette façon, l'extérieur du filament de polyamide est recouvert de microbilles de verre qui servent d'espaceurs, adhérentes à sa surface par l'action du PVA qui sert de colle. Un faisceau est fabriqué en assemblant ces filaments en un faisceau de section rectangulaire de 1700 $\mu$m de largeur, de 250 $\mu$m de profondeur et de 100 mm de long. Ce faisceau est créé par enroulement dans un conduit précisément usiné dans une feuille d'acier inoxydable 316 L de 100 mm x 20 mm x 10 mm. Le faisceau de fibres de polyamide est imprégné par un mélange de 25 ml de tétraéthoxysilane, de 10,0 ml d'eau minéralisée et de 0,35 ml d'ammoniaque 1 N préalablement agitée jusqu'à formation d'un mélange monophasique, et de 5 grammes de nanoparticules de silice mésoporeuse de diamètre de particules 20 nm et surface spécifique 600 m$^2$/ g, référence 637246 chez Sigma Aldrich. Le liquide doit totalement mouiller et remplir le conduit ainsi que le garnissage.

Le garnissage est refermé par un couvercle supérieur constitué d'une feuille d'acier inoxydable plane de dimensions identiques à celles de la feuille d'acier de base, vissée sur celle-ci, sur laquelle est préalablement déposée une épaisseur de 5 micromètres environ d'une paraffine fondant à 90 °C.

Le mélange est laissé à polymériser et geler durant 24 heures à 80 °C.

Les deux extrémités du garnissage sont coupées au ras de la feuille d'acier de façon à libérer la section du garnissage.

Le garnissage a une longueur de 100 mm.

Le couvercle est enlevé après avoir porté le garnissage à la température de 95°C de façon à fondre la paraffine, et le garnissage est séché sous un vide de 2 kPa à la température de 20°C durant 48 heures.

Le produit résultant est chauffé jusqu'à 550°C dans une atmosphère d'air pour le convertir en un garnissage multicapillaire en brûlant les fibres polymériques.

Une fois refroidi, le garnissage est clos de nouveau sur sa partie supérieure par une feuille plane d'acier inoxydable des mêmes dimensions, ou couvercle, vissée sur celle contenant le garnissage.

Exemple 3

Dans cet exemple, des fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion.

Un monofilament de polyamide (d'environ 100 μm de diamètre externe) est trempé dans une solution aqueuse contenant 10% d'un alcool polyvinylique et 15% en poids de microbilles de verre fournies par la firme Potters Ballotini présentant une répartition granulométrique comprise entre 40 et 70 μm de diamètre. Le monofilament est ensuite séché. De cette façon, l'extérieur du filament de polyamide est recouvert de microbilles de verre qui servent d'espaceurs, adhérentes à sa surface par l'action du PVA qui sert de colle. Un faisceau est fabriqué en assemblant ces filaments en un faisceau de section rectangulaire de 1700 μm de largeur, de 250 μm de profondeur et de 100 mm de long. Ce faisceau est créé par enroulement dans un conduit précisément usiné dans une feuille d'acier inoxydable 316 L de 100 mm x 20 mm x 10 mm. Le faisceau de fibres de polyamide est imprégné par un mélange de 25 ml de tétraéthoxysilane, de 10,0 ml d'eau minéralisée et de 0,35 ml d'ammoniaque 1 N préalablement agitée jusqu'à formation d'un mélange monophasique, et de 1g de microfibres de titanate de potassium, diamètre 0,2 μm, longueur 18 μm, commercialisées sous la marque TISMO D par la société Otsuka Chemical Co, ltd. Le liquide doit totalement mouiller et remplir le conduit ainsi que le garnissage.

Le garnissage est refermé par un couvercle supérieur constitué d'une feuille d'acier inoxydable plane de dimensions identiques à celles de la feuille d'acier de base, vissée sur celle-ci, sur laquelle est préalablement déposée une épaisseur de 5 micromètres environ d'une paraffine fondant à 90 °C.

Le mélange est laissé à polymériser et geler durant 24 heures à 80 °C.

Les deux extrémités du garnissage ainsi formés sont coupées au ras de la feuille d'acier de façon à libérer la section du garnissage.

Le garnissage a une longueur de 100 mm.

Le couvercle est enlevé après avoir porté le garnissage à la température de 95°C de façon à fondre la paraffine, et le garnissage est séché sous un vide de 2 kPa à la température de 20°C durant 48 heures.

Le produit résultant est chauffé jusqu'à 550°C dans une atmosphère d'air pour le convertir en un garnissage multicapillaire en brûlant les fibres polymériques.

Une fois refroidi, le garnissage est clos de nouveau sur sa partie supérieure par une feuille plane d'acier inoxydable des mêmes dimensions, ou couvercle, vissée sur celle contenant le garnissage.

Exemple 4

Dans cet exemple, des fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion.

Un monofilament de polyamide (d'environ 100 μm de diamètre externe) est trempé dans une solution aqueuse contenant 10% d'un alcool polyvinylique et 15% en poids de microbilles de verre fournies par la firme Potters Ballotini présentant une répartition granulométrique comprise entre 40 et 70 μm de diamètre. Le monofilament est ensuite séché. De cette façon, l'extérieur du filament de polyamide est recouvert de microbilles de verre qui servent d'espaceurs, adhérentes à sa surface par l'action du PVA qui sert de colle. Un faisceau est fabriqué en assemblant ces filaments en un faisceau de section rectangulaire de 1700 μm de largeur, de 250 μm de profondeur et de 100 mm de long. Ce faisceau est créé par enroulement dans un conduit précisément usiné dans une feuille d'acier inoxydable 316 L de 100 mm x 20 mm x 10 mm. Le faisceau de fibres de polyamide est imprégné par un mélange de 25 ml de tétraméthoxysilane, de 20,0 ml d'eau minéralisée préalablement agitée jusqu'à formation d'un mélange monophasique. Le liquide doit totalement mouiller et remplir le conduit ainsi que le garnissage.

Le garnissage est refermé par un couvercle supérieur constitué d'une feuille d'acier inoxydable plane de dimensions identiques à celles de la feuille d'acier de base, vissée sur celle-ci, sur laquelle est préalablement déposée une épaisseur de 5 micromètres environ d'une paraffine fondant à 90 °C.

Le mélange est laissé à polymériser et geler durant 24 heures à 80 °C.

Les deux extrémités du garnissage ainsi formés sont coupées au ras de la feuille d'acier de façon à libérer la section du garnissage.

Le garnissage a une longueur de 100 mm.

Le couvercle est enlevé après avoir porté le garnissage à la température de 95°C de façon à fondre la paraffine, et le garnissage est séché sous un vide de 2 kPa à la température de 20°C durant 48 heures.

Le produit résultant est chauffé jusqu'à 550°C dans une atmosphère d'air pour le convertir en un garnissage multicapillaire en brûlant les fibres polymériques.

Une fois refroidi, le garnissage est clos de nouveau sur sa partie supérieure par une feuille plane d'acier inoxydable des mêmes dimensions, ou couvercle, vissée sur celle contenant le garnissage.

Exemple 5

Dans cet exemple, des fibres polymériques précurseurs des conduits sont assemblées en faisceau, le faisceau est immergé dans une solution précurseur d'un gel de silice, solution dont on provoque le gel autour des fibres, puis les fibres sont éliminées par pyrolyse et combustion.

Un monofilament de polyamide (d'environ 100 $\mu$m de diamètre externe) est trempé dans une solution aqueuse contenant 10% d'un alcool polyvinylique et 15% en poids de microbilles de verre fournies par la firme Potters Ballotini présentant une répartition granulométrique comprise entre 40 et 70 $\mu$m de diamètre. Le monofilament est ensuite séché. De cette façon, l'extérieur du filament de polyamide est recouvert de microbilles de verre qui servent d'espaceurs, adhérentes à sa surface par l'action du PVA qui sert de colle. Un faisceau est fabriqué en assemblant ces filaments en un faisceau de section rectangulaire de 1700 $\mu$m de largeur, de 250 $\mu$m de profondeur et de 100 mm de long. Ce faisceau est créé par enroulement dans un tel conduit précisément usiné dans une feuille de titane (grade 2 ASTM) de 100 mm x 20 mm x 10 mm.

Le faisceau de fibres de polyamide est imprégné par un mélange de 1,6 g de Brij 56 (tensio actif commercial), de 1 g de dodécane, de 4 g de tétraméthoxysilane, et de 2g de HCl 0,05 N dans l'eau désionisée. On mélange TEOS, dodécane et Brij à 50°C jusqu'à ce que le mélange soit homogène. On ajoute ensuite l'acide 0,5 N (HCl) sous agitation forte. Le mélange est coulé dans le conduit portant les fibres.

Le garnissage est refermé par un couvercle supérieur constitué d'une feuille de titane (grade 2 ASTM) plane de dimensions identiques à celles de la feuille de titane de base, vissée sur celle-ci, sur laquelle est préalablement déposée une épaisseur de 5 micromètres environ d'une paraffine fondant à 90 °C.

Le mélange est laissé à polymériser et geler durant 24 heures à 20 °C.

Les deux extrémités du garnissage sont coupées au ras de la feuille de titane de façon à libérer la section du garnissage.

Le garnissage a une longueur de 100 mm.

Le couvercle est enlevé et le garnissage est séché sous un vide de 2 kPa à la température de 20°C durant 48 heures.

Le produit résultant est chauffé jusqu'à 550°C dans une atmosphère d'air pour le convertir en un garnissage multicapillaire en brûlant les fibres polymériques.

Une fois refroidi, le garnissage est clos de nouveau sur sa partie supérieure par une feuille plane de titane (grade 2 ASTM) des mêmes dimensions, ou couvercle, vissée sur celle contenant le garnissage.

Une fois refroidi, le garnissage est clos de nouveau sur sa partie supérieure par une feuille plane d'acier inoxydable des mêmes dimensions, ou couvercle, vissée sur celle contenant le garnissage.

Exemple 6

Une préforme des conduits du monolithe est réalisée en réalisant un faisceau composé de tronçons de fibres de carbone de 4,8 $\mu$m de diamètre et de cinq millimètres de long.

Le faisceau de ces tronçons ou aiguilles est ensuite inséré au fond d'un logement de 2.0 mm de large, de 2 mm de profondeur et de 75 mm de long creusé dans une feuille de 20x10x75 mm d'acier inoxydable 316L de façon à réaliser un empilement d'aiguilles naturellement tassées alignées suivant la grande longueur du conduit. Un couvercle plan dans une feuille de 20x10x75 mm de PTFE est préparé.

Le faisceau est réalisé avec une longueur de 75 mm de long.

Un monolithe silicique est synthétisé à partir de tetraéthoxysilane (TEOS, Aldrich 99%), de Polyéthylène oxyde (PEO, masse molaire =10 000, Aldrich 99%), de l'acide nitrique (68 %, Aldrich) et du NH4OH (pureté analytique, Aldrich).

Un Erlenmeyer de 250 mL est placé dans un bain de glace à 0°C avec un barreau aimanté. Puis de l'eau déminéralisée (36 g, 2 mol) et de l'acide nitrique (68% HNO3, 3.60 g, 38,84 mmol) sont ajoutés et agités à 500 rpm pendant 15 min. Ensuite, le PEO (4.79 g PEO dont 0.11 mol unité EO) est ajouté et le mélange est agité pendant une heure à 700 rpm afin que tout le PEO soit dissout. Le TEOS (37.70 g,0.18 mol) est ensuite ajouté et le mélange est agité pendant une heure. La solution transparente obtenue est ensuite versée à l'aide d'une pipette de 10 mL dans le sein du faisceau de tronçons obtenu précédemment préalablement gardé dans un environnement sec à 0°C avant le remplissage. Le barreau est ensuite placé dans une étuve sous atmosphère saturée de vapeur d'eau à 40°C pendant 72 heures. Le couvercle en PTFE est enlevé

Le barreau est immergé dans un bécher de 2 L avec 1500 mL d'eau déminéralisée à température ambiante pendant 1 h. Le monolithe est ensuite lavé de la même manière quatre fois par immersion dans de l'eau déminéralisée (500 mL, 1 h) jusqu'à obtention d'un pH neutre. Le monolithe est ensuite soumis à un traitement basique. Il est alors immergé dans 400 mL d'une solution d'ammoniaque (0.1 M) dans un flacon en polypropylène (500 mL). Le flacon est ensuite mis dans une étuve à 40°C pendant 24 heures.

Le monolithe récupéré est rincé à l'aide d'une pissette avec de l'eau distillée, séché à température ambiante pendant 48 h et à 40°C pendant 24 h sur une surface plane.

Il est calciné à 650°C sous air pendant 24 heures (rampe 1°C min-1).

Un couvercle plan dans une feuille de 20x10x75 mm d'acier inoxydable est préparé.

Le couvercle est repositionné avec un joint de PEEK à 340°C et refroidi.

Les embouts sont fixés sur la colonne et l'ensemble est étanché par une pellicule de colle époxy bicomposants.

BIBLIOGRAPHIE

[1] K Nakanishi, Phase separation in silica sol-gel system containing polyacrylic acid, Journal of non-crystalline Solids 139 (1992), 1-13 and 14-24;
[2] K. Nakanishi, Phase separation in Gelling Silica-Organic Polymer Solution: Systems Containing Poly(sodium styrenesulfonate), J. Am. Ceram. Soc. 74 (10) 2518-2530-30 (1991);
[3] N. Ishizuka, Designing monolithic double pore silica for high-speed liquid chromatography, Journal of Chromatography A, 797 (1998), 133-137.

**Revendications**

1. Procédé de fabrication d'un garnissage multicapillaire à partir d'un substrat de préformes ablatives, chaque préforme étant adaptée pour former, lors de son ablation, un conduit permettant la convection d'un fluide dans ledit garnissage, ledit procédé comprenant les étapes suivantes :

   (a) assemblage des préformes ablatives sous la forme d'au moins un faisceau ;
   (b) création d'un gel entre les préformes ablatives du faisceau par hydrolyse d'un précurseur organométallique en présence d'une quantité d'eau n'excédant pas dix fois la quantité stœchiométrique requise pour une hydrolyse complète dudit précurseur organométallique ;
   (c) ablation des préformes, de préférence par pyrolyse, oxydation, vaporisation, fusion et drainage, extraction mécanique ou attaque chimique, de sorte à former une pluralité de conduits dans le gel.

2. Procédé selon la revendication 1 comprenant en outre une étape de séchage entre les étapes (b) et (c) ou après l'étape (c).

3. Procédé selon la revendication 2 dans lequel le séchage est réalisé sous vide à température ambiante.

4. Procédé selon l'une des revendications précédentes dans lequel le précurseur organométallique est un alkoxide organométallique, un acétate organométallique, un carboxylate organométallique, un halogénure organométallique, un nitrate organométallique, un alcanoate organométallique, un acyloxyde organométallique ou un de leurs mélanges.

5. Procédé selon l'une des revendications précédentes dans lequel le précurseur organométallique est choisi parmi les dérivés organométalliques du silicium, de l'aluminium, du zirconium, du titane, d'une terre rare comme l'yttrium, le cérium ou le lanthane, du bore, du fer, du magnésium, du calcium, du strontium, du baryum, du germanium, du phosphore, du lithium, du potassium, du sodium, du niobium, du cuivre ou d'un de leurs mélanges.

6. Procédé selon l'une des revendications précédentes dans lequel le précurseur organométallique est le tétraméthoxysilane ou le tétraéthoxysilane.

7. Procédé selon l'une des revendications précédentes dans lequel le gel présente un volume poreux compris entre 20% et 90% en volume du gel, avantageusement compris entre 40 % et 65% en volume du gel.

8. Procédé selon l'une des revendications précédentes dans lequel les préformes comprennent des fils de polyamide, de polyoléfine, de polyacrylate, de polyméthacrylate, de polysulfone, de polyuréthane, de polyimide, de polyéther ou des fils de polyester.

9. Procédé selon la revendication 8, dans lequel les fils de polyester sont des fils de polyester hydrolysables.

10. Procédé selon l'une des revendications précédentes dans lequel les préformes ablatives sont recouverte d'une substance granulaire poreuse avant assemblage sous forme de faisceau.

11. Procédé selon l'une des revendications précédentes dans lequel les préformes ablatives sont conformées en tronçons occlus dans le corps du garnissage.

**12.** Procédé selon l'une des revendications précédentes dans lequel le gel est un gel de silice.

**13.** Procédé selon la revendication 12 dans lequel le gel est un gel de silice multimodal et dans lequel la quantité d'eau n'excède pas six fois la quantité stœchiométrique requise pour une hydrolyse complète dudit précurseur organométallique, de préférence dans lequel la quantité d'eau n'excède pas cinq fois la quantité stœchiométrique requise pour une hydrolyse complète dudit précurseur organométallique, encore plus préférentiellement dans lequel la quantité d'eau n'excède pas quatre fois la quantité stœchiométrique requise pour une hydrolyse complète dudit précurseur organométallique.

**Patentansprüche**

**1.** Verfahren zur Herstellung einer multikapillaren Auskleidung aus einem Substrat aus ablativen Vorformlingen, wobei jeder Vorformling geeignet ist, bei seiner Ablation einen Kanal zu bilden, der die Konvektion eines Fluids in der Auskleidung ermöglicht, wobei das Verfahren die folgenden Schritte umfasst:

(a) Zusammenfügen der ablativen Vorformlinge in mindestens einem Bündel;
(b) Bilden eines Gels zwischen den ablativen Vorformlingen des Bündels durch Hydrolyse einer organometallischen Vorstufe in Gegenwart einer Wassermenge, die das Zehnfache der für eine vollständige Hydrolyse der organometallischen Vorstufe erforderlichen stöchiometrischen Menge nicht überschreitet;
(c) Ablation der Vorformlinge, vorzugsweise durch Pyrolyse, Oxidation, Verdampfen, Schmelzen und Drainage, mechanische Extraktion oder chemisches Ätzen, so dass eine Vielzahl von Kanälen in dem Gel gebildet wird.

**2.** Verfahren nach Anspruch 1, das ferner einen Trocknungsschritt zwischen den Schritten (b) und (c) oder nach Schritt (c) umfasst.

**3.** Verfahren nach Anspruch 2, wobei die Trocknung unter Vakuum bei Raumtemperatur durchgeführt wird.

**4.** Verfahren nach einem der vorstehenden Ansprüche, wobei die organometallische Vorstufe ein organometallisches Alkoxid, ein organometallisches Acetat, ein organometallisches Carboxylat, ein organometallisches Halogenid, ein organometallisches Nitrat, ein organometallisches Alkanoat, ein organometallisches Acyloxid oder ein Gemisch davon ist.

**5.** Verfahren nach einem der vorstehenden Ansprüche, wobei die organometallische Vorstufe aus den organometallischen Derivaten von Silizium, Aluminium, Zirkonium, Titan, einer Seltenen Erde wie Yttrium, Cer oder Lanthan, Bor, Eisen, Magnesium, Calcium, Strontium, Barium, Germanium, Phosphor, Lithium, Kalium, Natrium, Niob, Kupfer oder einem Gemisch davon ausgewählt ist.

**6.** Verfahren nach einem der vorstehenden Ansprüche, wobei die organometallische Vorstufe Tetramethoxysilan oder Tetraethoxysilan ist.

**7.** Verfahren nach einem der vorstehenden Ansprüche, wobei das Gel ein Porenvolumen zwischen 20 Vol.-% und 90 Vol.-% des Gels, vorzugsweise zwischen 40 Vol.-% und 65 Vol.-% des Gels aufweist.

**8.** Verfahren nach einem der vorstehenden Ansprüche, wobei die Vorformlinge Garne aus Polyamid, Polyolefin, Polyacrylat, Polymethacrylat, Polysulfon, Polyurethan, Polyimid, Polyether oder Polyestergarne umfassen.

**9.** Verfahren nach Anspruch 8, wobei die Polyestergarne hydrolysierbare Polyestergarne sind.

**10.** Verfahren nach einem der vorstehenden Ansprüche, wobei die ablativen Vorformlinge vor dem Zusammenfügen zu einem Bündel mit einer porösen körnigen Substanz bedeckt werden.

**11.** Verfahren nach einem der vorstehenden Ansprüche, wobei die ablativen Vorformlinge zu im Körper der Auskleidung verschlossenen Abschnitten geformt werden.

**12.** Verfahren nach einem der vorstehenden Ansprüche, wobei das Gel ein Siliziumdioxidgel ist.

13. Verfahren nach Anspruch 12, wobei das Gel ein multimodales Siliziumdioxidgel ist und wobei die Wassermenge das Sechsfache der für eine vollständige Hydrolyse der organometallischen Vorstufe erforderlichen stöchiometrischen Menge nicht überschreitet, wobei vorzugsweise die Wassermenge das Fünffache der für eine vollständige Hydrolyse der organometallischen Vorstufe erforderliche stöchiometrische Menge nicht überschreitet, wobei noch bevorzugter die Wassermenge das Vierfache der für eine vollständige Hydrolyse der organometallischen Vorstufe erforderliche stöchiometrische Menge nicht überschreitet.

**Claims**

1. Method for manufacturing a multi-capillary packing from a substrate of ablative preforms, each preform being suitable for forming, during its ablation, a conduit enabling the convection of a fluid in said packing, said method comprising the following steps:

   (a) assembling the ablative preforms in the form of at least one bundle;
   (b) creating a gel between the ablative preforms of the bundle by hydrolysis of an organometallic precursor in the presence of a quantity of water not exceeding ten times the stoichiometric quantity required for complete hydrolysis of said organometallic precursor;
   (c) ablating the preforms, preferably by pyrolysis, oxidation, vaporization, melting and drainage, mechanical extraction or chemical attack, so as to form a plurality of conduits in the gel.

2. Method according to claim 1, further comprising a drying step between steps (b) and (c) or after step (c).

3. Method according to claim 2, wherein the drying is carried out under vacuum at ambient temperature.

4. Method according to one of the preceding claims, wherein the organometallic precursor is an organometallic alkaloid, organometallic acetate, organometallic carboxylate, organometallic halide, organometallic nitrate, organometallic alkanoate, organometallic acyloxide, or one of the mixtures thereof.

5. Method according to one of the preceding claims, wherein the organometallic precursor is chosen from the organometallic derivatives of silicon, aluminium, zirconium, titanium, a rare earth such as yttrium, cerium or lanthanum, boron, iron, magnesium, calcium, strontium, barium, germanium, phosphorus, lithium, potassium, sodium, niobium, copper, or one of the mixtures thereof.

6. Method according to one of the preceding claims, wherein the organometallic precursor is tetramethoxysilane or tetraethoxysilane.

7. Method according to one of the preceding claims, wherein the gel has a pore volume of between 20% and 90% by volume of the gel, advantageously between 40% and 65% by volume of the gel.

8. Method according to one of the preceding claims, wherein the preforms comprise yarns of polyamide, polyolefin, polyacrylate, polymethacrylate, polysulfone, polyurethane, polyimide, polyether or polyester yarns.

9. Method according to claim 8, wherein the polyester yarns are hydrolysable polyester yarns.

10. Method according to one of the preceding claims, wherein the ablative preforms are covered with a porous granular substance before assembling in bundle form.

11. Method according to one of the preceding claims, wherein the ablative preforms are shaped into segments occluded in the body of the packing.

12. Method according to one of the preceding claims, wherein the gel is a silica gel.

13. Method according to claim 12, wherein the gel is a multimodal silica gel and wherein the quantity of water does not exceed six times the stoichiometric quantity required for complete hydrolysis of said organometallic precursor, preferably wherein the quantity of water does not exceed five times the stoichiometric quantity required for a complete hydrolysis of said organometallic precursor, still more preferably wherein the quantity of water does not exceed four times the stoichiometric quantity required for complete hydrolysis of said organometallic precursor.

**FIG.1**

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2013064754 A

**Littérature non-brevet citée dans la description**

• **K NAKANISHI**. Phase separation in silica sol-gel system containing polyacrylic acid. *Journal of non-crystalline Solids*, 1992, vol. 139, 1-13, 14-24
• **K. NAKANISHI**. Phase separation in Gelling Silica-Organic Polymer Solution: Systems Containing Poly(sodium styrenesulfonate). *J. Am. Ceram. Soc.*, 1991, vol. 74 (10), 2518-2530, 30

• **N. ISHIZUKA**. Designing monolithic double pore silica for high-speed liquid chromatography. *Journal of Chromatography A*, 1998, vol. 797, 133-137